# FASCICULE DE BREVET EUROPEEN

(11) **EP 0 491 606 B1**
(45) Date de publication et mention de la délivrance du brevet: **20.09.1995**
(21) Numéro de dépôt: 91403384.0
(22) Date de dépôt: 13.12.1991
(51) Int. Cl.: H04L 12/42

(54) **Procédé de transmission d'informations entre des unités reliées à une boucle de transport d'informations**
Nachrichtenübertragungsverfahren zwischen mit einer Übertragungsschleife verbundenen Einheiten
Method of transmitting information between units linked with an information transmission loop

(30) Priorité: 18.12.1990 FR 9015830
(43) Date de publication de la demande: 24.06.1992
(73) Titulaire: MATRA COMMUNICATION, 29101 Quimper (FR)
(72) Inventeur: Fouques, Michel, F-92310 Sevres (FR); Lejay, Augustin, F-91370 Verrières le Buisson (FR)
(74) Mandataire: Fruchard, Guy

(56) Documents cités:
- FR-A- 2 556 536
- GB-A- 2 177 878
- IEEE TRANSACTIONS ON COMPUTERS, vol. 39, no. 3, mars 1990, pages 289-299; A.E. KAMAL et al.: "Utilizing bandwidth sharing in the slotted ring"
- TELEINFORMATIQUE-TRANSPORT ET TRAITEMENT DE L'INFORMATION DANS LES RESEAUX ET SYSTEMES TELEINFORMATIQUES, 1983, pages 145-171, Dunod, Paris, FR; C. MACCHI et al.: "Protection contre les erreurs en téléinformatique"

## Description

La présente invention concerne un procédé de transmission d'informations entre des unités reliées à une boucle de transport d'informations.

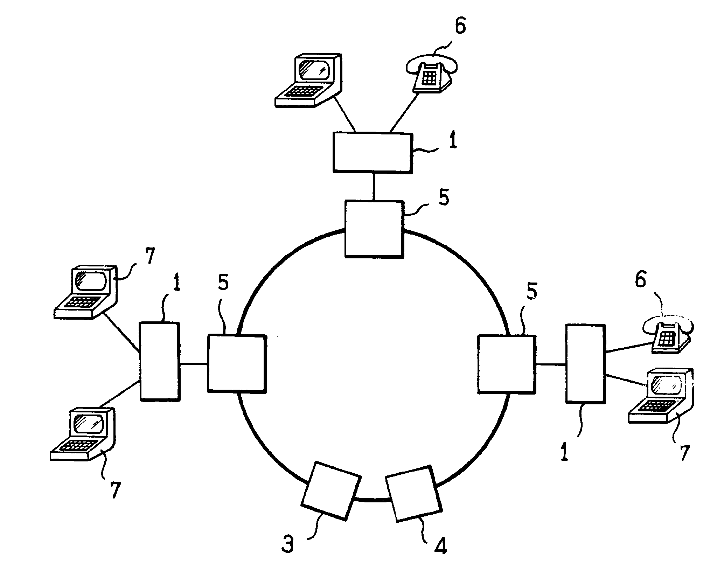

On connaît des réseaux de communication tels que représentés sur la figure unique ci-jointe comportant une série d'unités 1 appelés grappes reliées à une boucle de transport d'informations 2 comportant au moins une unité de synchronisation de boucle 3, une unité de contrôle de boucle 4 et une série d'unités de contrôle de grappe 5 chacune associée à une grappe 1. Les grappes sont elles-mêmes reliées à divers utilisateurs tels que des postes téléphoniques 6 ou des ordinateurs 7.

Dans les réseaux connus du type synchrone à jeton, la boucle véhicule une trame synchrone générée par l'unité de synchronisation de boucle. Cette trame synchrone comporte un seul élément de trame et la synchronisation effectuée par l'unité de synchronisation de boucle est telle que la longueur apparente de la boucle, c'est-à-dire le temps nécessaire pour effectuer un tour complet de la boucle, soit identique à la durée de l'élément de trame, par exemple 125 microsecondes. Le délai de propagation de cet élément de trame sur la boucle doit bien entendu être inférieur à la durée d'un tour de boucle pour tenir compte des retards qui sont introduits par chacune des grappes. L'élément de trame unique comporte généralement un octet de synchronisation suivi d'un canal paquet et éventuellement de canaux circuit.

Le jeton est une partie de l'élément de trame et est représentatif de la disponibilité de celui-ci à recevoir une information à transmettre. En pratique, l'information à transmettre, qui constitue ce qu'on appelle une transaction, est découpée en segments ayant chacun une longueur compatible avec la longueur du canal paquet de la boucle. L'émission du segment sur la boucle s'effectue en fonction du protocole d'accès au canal paquet, basé sur le jeton d'accès.

En émission, la grappe expéditrice attend de recevoir un élément de trame avec un jeton libre pour commencer à émettre le premier segment d'une transaction. A la réception de ce segment, la grappe destinataire effectue un acquittement positif de celui-ci s'il a été reçu correctement. Les segments suivants sont émis les uns à la suite des autres par la grappe expéditrice jusqu'à la fin de la transaction.

En cas d'erreur de transmission, d'engorgement de la grappe destinataire, ou d'erreur de séquencement des segments de la transaction, la grappe expéditrice ré-émet la transaction à partir du segment refusé. Après réception du dernier acquittement, la grappe expéditrice libère le jeton afin qu'il puisse être utilisé par d'autres grappes.

On remarque que pendant toute la durée d'une transaction le jeton reste constamment occupé pour l'émission d'un segment ou l'envoi en retour de l'acquittement par la grappe destinataire. Les autres grappes du réseau sont donc dans l'impossibilité d'émettre des informations.

Il est également connu du document IEEE Transactions on computers, vol. 39, No 3 de mars 1990 pages 289-299 un procédé de transmission consistant à générer sur une boucle une série d'éléments de trame à jeton qui sont séquentiellement affectés au transport d'un segment de transaction. Toutefois le procédé décrit dans ce document comprend un acquittement de chacun des segments de transaction par la grappe destinataire de sorte que, de même que précédemment, le jeton d'un élément de trame reste occupé pendant toute la durée de la transaction.

Un but de l'invention est d'augmenter les performances d'un réseau de transmission d'informations à transport synchrone à jeton.

En vue de la réalisation de ce but, on prévoit selon l'invention un procédé de transmission d'informations entre des grappes assurant chacune une liaison entre des utilisateurs et une boucle de transport d'informations comportant une série d'unités de contrôle de grappe, au moins une unité de synchronisation de boucle et une unité de contrôle de boucle, comportant les étapes de générer sur la boucle une série d'éléments de trame circulant sur celle-ci de façon synchrone, ces éléments de trame ayant chacun une longueur égale à un sous-multiple d'une longueur apparente de la boucle et comportant -chacun un jeton représentatif d'une disponibilité de l'élément de trame à recevoir des informations, et de subdiviser une information à transmettre en une série de segments de transaction pouvant chacun être introduit dans un élément de trame ; caractérisé en ce qu'on introduit successivement les segments de transaction avec une adresse de grappes expéditrices et une adresse de grappes destinataires dans des éléments de trame chaque fois qu'un élément de trame se présente avec un jeton libre, on libère le jeton d'un élément de trame lorsqu'il a délivré un segment de transaction à une grappe destinataire, on introduit une indication de fin de transaction dans un élément de trame comportant le dernier segment de transaction, et on charge cet élément de trame à la grappe destinataire avec un acquittement de l'ensemble de la transaction.

Ainsi, un segment de trame redevient disponible dès que le segment de transaction qu'il portait a été délivré et on augmente donc la capacité du réseau à traiter simultanément plusieurs transactions.

En pratique, la longueur apparente de la boucle, c'est-à-dire le temps qui est nécessaire pour faire un tour de boucle, est calculé en multipliant la durée d'un élément de trame par le nombre d'éléments de trame que l'on souhaite avoir sur la boucle. Physiquement, cela permet donc d'augmenter non seulement la longueur de la boucle, c'est-à-dire le périmètre total joignant les grappes, mais également le nombre de grappes.

A titre d'exemple, une trame comportant 32 éléments de trame ayant chacun une durée de 125 microsecondes, c'est-à-dire une trame totale de 4 millisecondes, peut fonctionner sur une boucle ayant une longueur physique allant jusqu'à 600 kilomètres et permettant un raccordement de 255 grappes.

Bien entendu si la longueur physique de la boucle est inférieure à 600 kilomètres ou si le nombre de grappes est inférieur à 255, l'unité de synchronisation de boucle assure un retard complémentaire au temps de transmission sur la boucle pour que la longueur apparente de la boucle reste de 4 millisecondes.

Selon une version avantageuse de l'invention, on introduit une indication de fin de transaction dans un élément de trame comportant le dernier segment de transaction et on charge cet élément de trame à la grappe destinataire avec un acquittement positif de l'ensemble de la transaction. De préférence, une grappe destinataire envoie un acquittement négatif dès qu'un incident de transmission est perçu au niveau de cette grappe, par exemple en cas d'engorgement de la grappe destinataire. Ainsi, un jeton est libéré dès que le segment correspondant a été reçu par la grappe destinataire de sorte que l'élément de trame correspondant peut être immédiatement utilisé par une autre grappe, à l'exception de l'élément de trame correspondant au dernier segment de la transaction ou à un acquittement négatif, le jeton de cet élément de trame restant occupé pour transmettre l'acquittement à la grappe expéditrice.

Etant donné que l'émission d'un segment est conditionnée par la réception d'un jeton libre et que les éléments de trame se succédant dans la boucle sont chacun pourvus d'un jeton qui peut être en position libre ou occupée, l'envoi d'une transaction sur la boucle peut être discontinu. De plus, l'acquittement positif d'une transaction par la grappe destinataire ne parvient à la grappe expéditrice qu'après un temps égal à un tour de boucle après l'émission du dernier segment de transaction par la grappe expéditrice. On prévoit donc avantageusement une gestion de l'état des transactions au niveau de l'unité de contrôle de grappes en utilisant une numérotation des transactions, ce qui permet de commencer l'émission d'une nouvelle transaction avant d'avoir reçu un acquittement positif pour une transaction venant d'être émise et de retrouver cette transaction pour l'émettre à nouveau dans le cas où un acquittement négatif ou aucun acquittement ne serait reçu de la part de la grappe destinataire.

De même, la réception d'une transaction peut être discontinue et entrelacée avec d'autres transactions provenant de grappes différentes. On prévoit donc également une gestion de réception de transaction mémorisant le numéro du segment courant et le numéro dans la transaction. La numérotation en séquences des segments d'une transaction permet en outre d'effectuer un contrôle au niveau de la grappe destinataire pour s'assurer que des segments se suivent et envoyer un acquittement négatif dès qu'une erreur de séquence est détectée.

Bien entendu si une grappe expéditrice reçoit un acquittement positif pour une transaction qui est encore en cours d'émission, un tel acquittement ne peut avoir été envoyé que par erreur et la transaction est ré-émise dans son intégralité.

Selon encore un autre aspect avantageux de l'invention, on procède à une ré-émission d'une information lorsqu'aucun acquittement positif d'une transaction n'est parvenu à la grappe expéditrice après un temps correspondant à la longueur apparente de la boucle à la suite de l'émission du dernier segment de transaction. En effet, au-delà de ce temps, l'absence de réception d'un acquittement positif signifie que la grappe destinataire n'a pas été en mesure de donner cet acquittement et que le dernier segment de la transaction au moins a été perdu.

Bien entendu l'invention n'est pas limitée au procédé particulier non limitatif décrit et est susceptible de variantes de mises en oeuvre qui apparaîtront à l'homme de métier.

En particulier, bien que dans le procédé décrit on ait envisagé de libérer le jeton au niveau de la grappe destinataire afin de pouvoir réutiliser immédiatement l'élément de trame correspondant, on peut prévoir de conserver le jeton occupé au niveau de la grappe destinataire afin de réserver l'élément de trame correspondant à la transaction en cours pendant toute la durée de celle-ci.

Par ailleurs, le procédé selon l'invention peut être appliqué à une boucle élémentaire comme illustré sur la figure ci-jointe ou à une boucle fédératrice associant plusieurs boucles élémentaires telles que décrites dans le brevet déposé le même jour que le présent brevet sous le titre "Réseau de communication en boucle à trame synchrone" et qui est incorporé ici par référence.

## Revendications

1. Procédé de transmission d'informations entre des grappes (1) assurant chacune une liaison entre des utilisateurs (6, 7) et une boucle (2) de transport d'informations comportant une série d'unités de contrôle de grappe (5), au moins une unité de synchronisation de boucle (3) et une unité de contrôle de boucle (4), comportant les étapes de générer sur la boucle une série d'éléments de trame circulant sur celle-ci de façon synchrone, ces éléments de trame ayant chacun une longueur égale à un sous-multiple d'une longueur apparente de la boucle et comportant chacun un jeton représentatif d'une disponibilité de l'élément de trame à recevoir des informations, et de subdiviser une information à transmettre en une série de segments de transaction pouvant chacun être introduit dans un élément de trame ; caractérisé en ce qu'on introduit successivement les segments de transaction avec une adresse de grappes expéditrices et une adresse de grappes destinataires dans des éléments de trame chaque fois qu'un élément de trame se présente avec un jeton libre, on libère le jeton d'un élément de trame lorsqu'il a délivré un segment de transaction à une grappe destinataire, on introduit une indication de fin de transaction dans un élément de trame comportant le dernier segment de transaction, et on charge cet élément de trame à la grappe destinataire avec un acquittement de l'ensemble de la transaction.

2. Procédé selon la revendication 1, caractérisé en ce qu'une grappe destinataire envoie un acquittement négatif dès qu'un incident de transmission est perçu au niveau de cette grappe.

3. Procédé selon la revendication 2, caractérisé en ce qu'on numérote les segments successifs d'une transaction et on transmet cette numérotation à la grappe destinataire.

4. Procédé selon la revendication 1, caractérisé en ce qu'on procède à une ré-émission d'une information lorsqu'aucun acquittement positif d'une transaction n'est parvenu à la grappe expéditrice après un-temps correspondant à la longueur apparente de la boucle à la suite de l'émission du dernier segment de la transaction considérée.

5. Procédé selon la revendication 1, caractérisé en ce qu'on numérote les transactions successives effectuées par une même grappe expéditrice vers une même grappe destinataire.

6. Procédé selon l'une des revendications 1 à 5, caractérisé en ce qu'à l'issue d'une émission de transaction par une grappe on laisse passer à cette grappe au moins un élément de trame avec un jeton libre avant de commencer l'émission d'une nouvelle transaction.

## Patentansprüche

1. Verfahren zur Informationsübertragung zwischen Mehrfachstationen (1), deren jede für eine Verbindung zwischen den Benutzern (6,7) und einer Informationsübertragungsschleife (2) sorgt, die eine Reihe von Steuereinheiten (5) für die Mehrfachstationen, zumindest eine Schleifensynchronisationseinheit (3) und eine Schleifensteuereinheit (4) umfaßt, wobei das Verfahren die Schritte enthält, gemäß welchen eine Reihe von in der Schleife synchron umlaufenden Rahmenelementen in dieser Schleife erzeugt werden, wobei diese Rahmenelemente jeweils eine Länge haben, die gleich einem Teiler einer scheinbaren Länge der Schleife ist, und wobei jedes der Rahmenelemente einen Token enthält, der repräsentativ ist für die Verfügbarkeit des Rahmenelements, das Informationen empfangen soll, und gemäß welchen eine zu übertragende Information in eine Reihe von Transaktionssegmenten unterteilt wird, deren jedes in ein Rahmenelement eingegeben werden kann, dadurch gekennzeichnet, daß jedesmal, wenn sich ein Rahmenelement mit einem freien Token präsentiert, die Transaktionssegmente mit einer Adresse von Sender-Mehrfachstationen und einer Adresse von Empfänger-Mehrfachstationen in die Rahmenelemente eingegeben werden, daß der Token eines Rahmenelements freigegeben wird, wenn dieser ein Transaktionssegment an eine Empfänger-Mehrfachstation übergeben hat, daß eine Anzeige des Transaktionsendes in ein das letzte Segment der Transaktion enthaltendes Rahmenelement eingegeben wird und daß dieses Rahmenelement an der Empfänger-Mehrfachstation mit einer Bestätigung der gesamten Transaktion versehen wird.

2. Verfahren nach Anspruch 1, dadurch gekennzeichnet, daß eine Empfänger-Mehrfachstation eine Negativbestätigung sendet, sobald in Höhe dieser Mehrfachstation ein Übertragungsfehler registriert wird.

3. Verfahren nach Anspruch 2, dadurch gekennzeichnet, daß die aufeinanderfolgenden Segmente einer Transaktion numeriert werden und diese Numerierung zu der Empfänger-Mehrfachstation übertragen wird.

4. Verfahren nach Anspruch 1, dadurch gekennzeichnet, daß eine Information erneut gesendet wird, wenn im Anschluß an die Sendung des letzten Segments der betreffenden Transaktion nach einer Zeitspanne, die der scheinbaren Länge der Schleife entspricht, keine positive Bestätigung einer Transaktion eingeht.

5. Verfahren nach Anspruch 1, dadurch gekennzeichnet, daß die aufeinanderfolgenden Transaktionen, die von derselben Sender-Mehrfachstation zu derselben Empfänger-Mehrfachstation durchgeführt werden, numeriert werden.

6. Verfahren nach einem der Ansprüche 1 bis 5, dadurch gekennzeichnet, daß man am Ende einer Übertragung durch eine Mehrfachstation zumindest ein Rahmenelement mit einem freien Token an dieser Mehrfachstation passieren läßt, bevor mit dem Senden einer neuen Transaktion begonnen wird.

## Claims

1. A process for the transmission of information between nodes (1) each providing a connection between users (6, 7) and an information transport loop (2) comprising a series of node control units (5), at least one loop synchronisation unit (3) and a loop control unit (4), comprising the steps of generating on the loop a series of frame elements circulating synchronously thereon, said frame elements each being of a length equal to a sub-multiple of an apparent length of the loop and each comprising a token representative of an availability on the part of the frame element to receive items of information, and subdividing an item of information to be transmitted into a series of transaction segments which can each be introduced into a frame element; characterised by successively introducing the transaction segments with an address of sender nodes and an address of receiver nodes into frame elements each time that a frame element is presented with a free token, liberating the token of a frame element when it has delivered a transaction segment to a receiver node, introducing a transaction-end indication into a frame element comprising the last transaction segment, and loading said frame element at the receiver node with a receipt for the whole of the transaction.

2. A process according to claim 1 characterised in that a receiver node sends a negative receipt as soon as a transmission incident is detected at the location of said node.

3. A process according to claim 2 characterised in that the successive segments of a transaction are numbered and said numbering is transmitted to the receiver node.

4. A process according to claim 1 characterised in that an item of information is re-transmitted when no positive receipt for a transaction has reached the sender node after a time corresponding to the apparent length of the loop following transmission of the last segment of the transaction in question.

5. A process according to claim 1 characterised in that the successive transactions effected by the same sender node to the same receiver node are numbered.

6. A process according to one of claims 1 to 5 characterised in that at the end of the transmission of a transaction by a node at least one frame element with a free token is passed to said node before beginning the transmission of a fresh transaction.
